# EUROPEAN PATENT SPECIFICATION

(11) **EP 1 369 796 B1**
(45) Date of publication and mention of the grant of the patent: **07.10.2009**
(21) Application number: 03011053.0
(22) Date of filing: 20.05.2003
(51) Int. Cl.: G06Q 30/00, G06F 9/44

(54) **Customizable electronic bill presentment and payment system and method**
Anpassbares elektronisches System und Verfahren zum Vorlegen und Bezahlen von Rechnungen
Système et méthode électronique personnalisable pour la présentation et le paiement de factures

(30) Priority: 22.05.2002 US 153105
(43) Date of publication of application: 10.12.2003
(73) Proprietor: PITNEY BOWES INC., Stamford, CT 06926-0700 (US)
(72) Inventor: Clarke, William D., Florence, Mass.01062 (US); Laprade, Robert A., Hadley, Mass.01035 (US); Palma, Daniel M., Wilbraham, Mass.01095 (US)
(74) Representative: HOFFMANN EITLE

(56) References cited:
- EP-A- 1 077 405
- EP-A- 1 081 617
- WO-A-00/34859
- WO-A-00/67176
- WO-A-01/44932
- WO-A-01/46802
- WO-A-02/37393
- US-A1- 2002 054 170
- BUSINESS TASK FORCE OF NACHA'S COUNCIL FOR ELECTRONIC BILLING AND PAYMENT: "An Overview of Electronic Bill Presentment and Payment Operating Models" ELECTRONIC BILL PAYMENT/PRESENTMENT BUSINESS PRACTICES, XX, XX, 9 April 1999 (1999-04-09), pages 1-12, XP002170181
- LUBELL J: "STRUCTURED MARKUP ON THE WEB" MARKUP LANGUAGES, MIT PRESS, CAMBRIDGE, MA, US, vol. 1, no. 3, 1999, pages 7-22, XP000863188 ISSN: 1099-6621
- BHAVEN SHAH: "Presenting XML to the Web" XML JOURNAL, vol. 1, no. 1, March 2000 (2000-03), pages 18-23, XP002211938 ISSN: 1534-9780

## Description

The present invention relates to a customizable electronic bill presentment and payment (EBPP) system using a dynamic model/view/controller architecture.

Many organizations are becoming more involved in conducting business electronically (so called e-business), over the Internet, or on other computer networks. E-business calls for specialized applications software such as Electronic Bill Presentment and Payment (EBPP) and Electronic Statement Presentment applications. To implement such applications, traditional paper documents have to be converted to electronic form to be processed electronically and exchanged over the Internet, or otherwise, with customers, suppliers, or others. The paper documents will typically be re-formatted to be presented electronically using Hypertext Markup Language (HTML) Web pages, e-mail messages, Extensible Markup Language (XML) messages, or other electronic formats suitable for electronic exchange, processing, display and/or printing.

A technique for facilitating customer transactions over a computer network is disclosed in WO 00/67176.

Billers who provide their customers with the option of viewing and paying their bills over the Internet have varying requirements for the business content to be provided. In addition to varying content, different billers will want the customer interface and presentation of the billing information to have a particular "look-and-feel."

Instead of programming their own EBPP system from scratch, billers have the option of purchasing or outsourcing a pre-made EBPP system from a vendor. The biller may also hire a third party electronic billing service to provide the desired EBPP services to the biller's customers. In any of these situations, a pre-made EBPP system must be customized to meet the particular business and presentation requirements of the biller. Accordingly, a vendor who provides an EBPP solution to multiple billers needs to consider the extent to which its system can be customized, and the ease with which customization can be achieved.

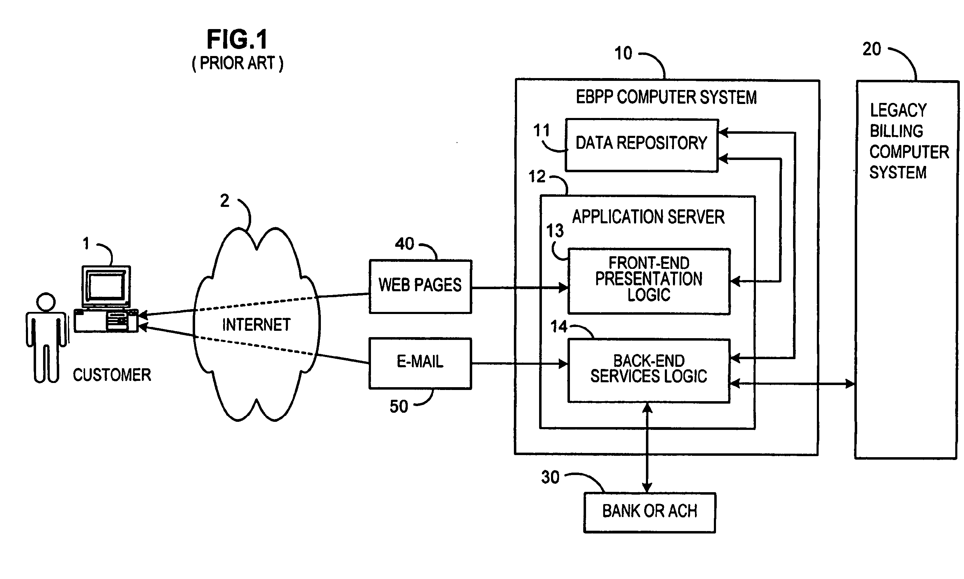

Figure 1 depicts a prior art EBPP system. In the prior art system, for one or more billers, EBPP computer system **10** controls the presentment of billing service web pages **40** over the Internet **2** to customer **1.** Billing information is gathered by EBPP computer system **10** from the biller's legacy computer systems **20.** Typically, billing data will be parsed by EBPP system **10** from a print stream generated by the legacy system **20**, the legacy print stream being originally intended for printing conventional hard-copy bills. A preferred method for parsing billing data from the legacy print stream is described in co-pending European patent application 00911797.9, titled Data Parsing System for Use in Electronic Commerce, filed February 11, 2000.

In addition to communication via web pages **40** generated during a session, EBPP computer system **10** includes the capability of sending and receiving e-mail messages **50** to and from the user **1**. Typically, system **10** will generate a message to user **1** upon the occurrence of a predetermined event. An example of such an event is a new billing statement becoming available, or the approach of a due date for an unpaid bill. EBPP system **10** is also capable of communicating with a bank or ACH network **30** to process bill payment activities.

System **10** includes a data repository **11** in which billing data for use with system **10** may be stored in a variety of formats. Data in the repository can be organized in a database, such as the kind available from Oracle or DB2. Statement data archives may also be stored in a compressed XML format. XML is a format that allows users to define data tags for the information being stored.

The EBPP computer system **10** itself is typically comprised of standard computer hardware capable of processing and storing high volumes of data, preferably utilizing a J2EE platform. EBPP system **10** is also capable Internet and network communications. Of interest with respect to the present patent application, the prior art EBPP computer system **10** includes a software architecture within an application server **12** for generating and handling electronic billing functions. At a fundamental level, the software architecture of the prior art system **10** is split into two conceptual components, the front-end presentation logic **13** and the back end servicing logic **14.** The split between front-end and back-end logic **13** and **14** serves to reduce the amount of recoding necessary for the system to be customized for different billers.

The front-end presentation logic **13** is the portion of the software that is the primary Internet interface for generating web page presentations. As such, the front end presentation logic **13** includes code that is custom written to meet the specific business and presentation needs of the biller. Functionality that might be included in front-end logic **13** is enrollment, presentation, payment instructions, and reporting.

Typically, front-end logic **13** is comprised of Java Server Pages (JSP's) that control the presentation of billing information in the form of web pages. The front-end logic JSP's also receive and respond to inputs as the customer makes requests for various services to be provided. The JSP's can be recoded to accommodate different look-and-feel and business requirements of different billers. Within the JSP's, front-end logic **13** can also utilize Enterprise Java Beans (EJB's) that comprise objects for performing specific tasks.

The back-end services logic **14** comprises the software for functions that typically do not need to be customized for particular billers. Preferably, very little of the back-end services must be customized for a particular biller's needs. For example, back-end logic may include the software for extracting the billing data from the biller legacy billing computers **20.** Similarly, logic for handling of payments with the bank or ACH network **30** and systems for generating and receiving e-mail messages will be handled in the back-end services logic **14.**

As a result of the distinction between the front-end and back-end logic **13** and **14,** re-coding of software to provide customization for different billers is somewhat reduced. However, a significant amount of presentation logic and some business logic must always be re-written to meet a particular biller's needs. The re-coding required for customization can require a high degree of programming skill and can add expense to implementation of a billers on-line presence. The requirement for re-writing code introduces a risk that changes to the way that a web page looks may in fact introduce a problem that could cause the content of the information being displayed to be incorrect. Another problem with this prior art system is that after a system is customized it may be difficult to provide upgrades and future releases of the software. In order to be sure that new releases work properly substantial efforts would be necessary to retrofit the new release with the code changes that were made for the particular biller.

As will be described in more detail below, a preferred embodiment of the present invention is an expansion on a Model-View-Controller (MVC) software design architecture. An example of a system using the MVC concept is Apache Jakarta Struts Project (Struts) (see http:/rakarta.apache.org/struts). Known MVC architectures such as Struts, however, fail to address the problems caused by the need for customization described above. If one were to attempt customization electronic billing presentations using a known Struts architecture, changes to code, recompiling, and debugging would still be required, because business and presentation variations must still be re-roded and recompiled in the controller, the model, and/or the view components.

In the prior art, certain Internet services such as "Yahoo!" and "Excite" have allowed registered users to create personalized web pages. Such personalized web pages allow the user to select certain information and presentations of the information available from the service. When the registered user visits the web site and is recognized, the user's selected information and arrangement is displayed. For example, the user may choose to see an arrangement including a weather report for his region, sports scores for his favorite teams, and stock quotes for his investment portfolio. These personalization features, however, do not provide a way for a biller to offer EBPP services customized to its particular business and presentation needs,

Accordingly, the prior art leaves disadvantages and needs to be addressed by the present invention, as discussed below.

According to the present invention, there is provided an electronic bill presentment computer system as set out in Claim 1.

Optional features are set out in the dependent claims.

Embodiments of the present invention will be described by way of example with reference to the figures of the accompanying drawings, wherein elements having the same reference numeral designations represent like elements throughout and wherein:
Figure 1 is a prior art EBPP system;
Figure 2 is a customizable EBPP system according to an embodiment;
Figure 3 is a sample HTTP request and corresponding XML action descriptor for use with an embodiment;
Figure 4 is a sample look-and-feel template stored in XML format for use with an embodiment; and
Figure 5 represents a typical web page layout that could be generated using the presentation features of an embodiment.

The following describes a customizable EBPP system whereby the business logic and presentation logic need not be changed to provide customization to different billers. Rather, customization features are stored in data repositories, preferably in XML format, whereby a controller activates appropriate objects and routines within the business and presentation logic based on the stored customization features. Accordingly, customization for a particular biller is achieved by changing data stored in a repository, rather than reprogramming core logic.

The electronic bill presentment computer system provides bill information from a biller to a remote customer over a network. At the beginning of a transaction session, the customer submits a requested transaction to the electronic bill presentment computer system. The electronic bill presentment computer system comprises standard computer hardware configured and programmed to include the necessary software components and storage facilities.

A first storage facility, called a presentation descriptor repository, stores data pertaining to the biller's particular look-and-feel for presentation of electronic billing results to the customer. The software for the system includes a presentation logic module that prepares a visual presentation of results of the requested transaction from the system to the customer. The presentation logic module retrieves look-and-feel data from the presentation descriptor repository to generate the presentation.

The system also includes an action descriptor repository. The action descriptor repository comprises stored scripts of processing instructions corresponding to a wide variety of potential transactions allowed by a particular biller. The scripts are customized to particular electronic bill requirements of the biller and can include identifications of business objects to instantiate, methods to invoke the business objects, and presentation instructions. The preferred embodiment further includes a non-customized business logic module including a plurality of business objects for determining electronic billing results based on the customer's request. A variety of business objects are supplied with the basic system to offer a wide range of functionality that can be customized.

An interaction controller serves as the central means for directing the operation of the various components of the system. The controller receives the requested transaction from the customer and retrieves the corresponding script of processing instructions from the action descriptor repository. Then the controller invokes the appropriate business objects in the business logic module in accordance with the action descriptor scripts from the action descriptor repository. The controller also provides basic presentation instructions to the presentation logic module in accordance with the customized script instructions.

An important feature is that the action descriptor repository and the presentation descriptor repository be discrete from the business logic module, the presentation logic module, and the interaction controller. In a further preferred embodiment, the repositories store the respective instructions relating the particular billers' requirements in XML format. This format provides flexibility by allowing user designated tags, and ease of use with different types of software applications. This arrangement of the repositories and logic modules provides that the repositories are the part of the system directly reflecting the biller's particular electronic billing needs. The information in the repositories can then be customized without requiring recoding of the base code for the system. Also, this arrangement allows that the base code can be upgraded relatively easily for a variety of billers who have adopted the system to fulfil their EBPP needs.

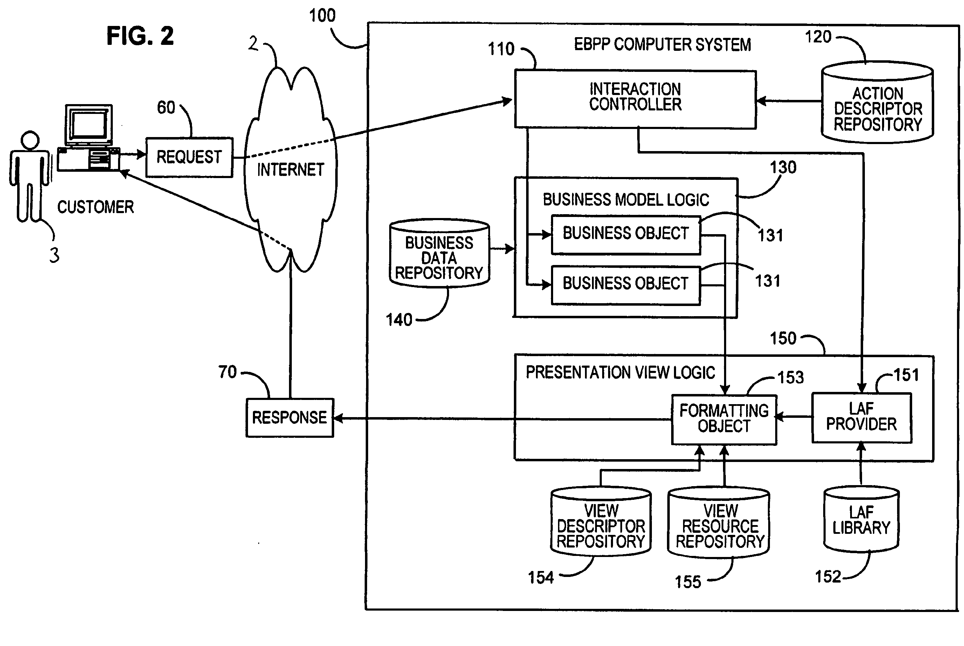

A customizable EBPP system in accordance with an embodiment of the present invention is depicted in Fig. 2. EBPP computer system **100** includes an EBPP software product in accordance with an embodiment that can be extended and customized without inhibiting subsequent upgrades and without modifying the base code set for the product. In part, this is accomplished by incorporating what will be referred to as a dynamic model-view-controller methodology.

To a customer **3,** interacting with the EBPP system **100** through the Internet **2,** the functionality and presentation of information on a EBPP web page will not necessarily be distinguishable from a prior art EBPP system **10.** However, the manner in which EBPP computer system **100** processes interactions with customer **3** will be significantly different.

At the beginning of a session, a customer **3** uses an Internet browser (Netscape, Internet Explorer, etc.) to visit the biller's EBPP website. To initiate an EBPP transaction the customer **3** will click on a button or a link on a web page that will cause a transaction request **60** to be sent to the web server housing the EBPP system **100.** The request **60** is typically in HTTP format, and includes a URL parameter for the customer **3.** Request **60** is processed by EBPP system **100** and an appropriate response **70** is presented, typically in the form of a web page. This interaction continues as long as the customer **3** is accessing the web site.

In the preferred embodiment of the invention, the processes for generating the response **70** based on the request **60** can be described as using a novel "dynamic MVC" architecture or methodology. The system is "dynamic" in the sense that the same model, view, and control related components can be used to provide customized EBPP service using a common set of base code. The dynamic aspect of the embodiment relies on customized data stored independently of the core logic. The customized data can be interpreted as instructions that activate the specially designed logic modules in a manner that they can provide a very wide range of customized functionality.

The business model logic module **130** represents the business logic needed to fulfill the request **60.** In the preferred embodiment the business logic module **130** is comprised of business objects **131** that interact with the business data repository **140,** perform calculations, and provide coordination between related objects.

Presentation logic **150** is responsible for constructing the response, which in most cases will be an HTML web page, showing the results of requests and links or buttons to allow for additional requests. The content and format of a presentation is based on content descriptors pertinent to the particular information to be presented and a look-and-feel (LAF) framework active for the current session. LAF data is stored in a repository called the LAF repository **152** and descriptor data for how to present particular results is stored in a view descriptor repository **154.** Also, further data for cosmetic features such as graphics or fonts is available for use and stored in a view resource repository **155.**

Interaction controller **110** processes the HTTP request and data sent from the customer and instructs the business model logic module **130** to activate the appropriate business objects **131.** The interaction controller **110** also selects a presentation look-and-feel to initiate from the LAF provider **151** to prepare an appropriate presentation to send back to the customer **3** upon completion of the response to the request **60.**

The controller **110** controls the processes of the business logic module **130** and the presentation view logic **150** based on sets of instructions called action descriptors that are stored in the action descriptor repository **120.** For a request from a particular customer **3,** the controller **110** will retrieve a corresponding action descriptor. The action descriptor is interpreted by the controller **110** for subsequently controlling logic modules **130** and **150.** In the preferred embodiment of the invention, the actions descriptors are stored in XML format in the action descriptor repository **120.** The XML action descriptors may then be modified relatively easily to provide customized responses for different billers, without the necessity of rewriting base code for the interaction controller **110,** the business model logic module **130** or the presentation view logic module **150.** XML is a preferred format because it is a universally usable language for data on the Web. Further, XML allows the creation of unique data formats to allow greater flexibility to for the purposes of allowing customization. In particular, the ability to create an unlimited number of tags in XML allows this flexibility. XML is also a good way to store information because it can be easily read and understood by humans and machines. XML has the advantage that it describes the content of the data, rather than how it should look.

In operation, the interaction controller **110** accepts an HTTP request received from the customer **3.** In the preferred embodiment the controller determines actions to be invoked based on the URL parameter passed with each request. The URL parameter will indicate both the name of the dialog and the path that categorizes the dialog. For example, a request with "url=/company_profile/accounts/CompanyAccount" will invoke the dialog named "Company Account." This dialog is associated with the path "company_profile/accounts" that basically mirrors the menu option at the web page, at customer's computer, that is used to invoke the dialog.

Once the controller **110** determines the dialog to invoke from the URL parameter, it will retrieve a corresponding action descriptor XML for that dialog from the action descriptor repository **120.** The action descriptor XML will contain the instructions describing what must occur for the interaction corresponding to the request to be completed. The action descriptor describes which business objects **131** to instantiate, what methods to invoke on each off the business objects **131,** and based on the results of those methods, which presentation to send back to the user **3.**

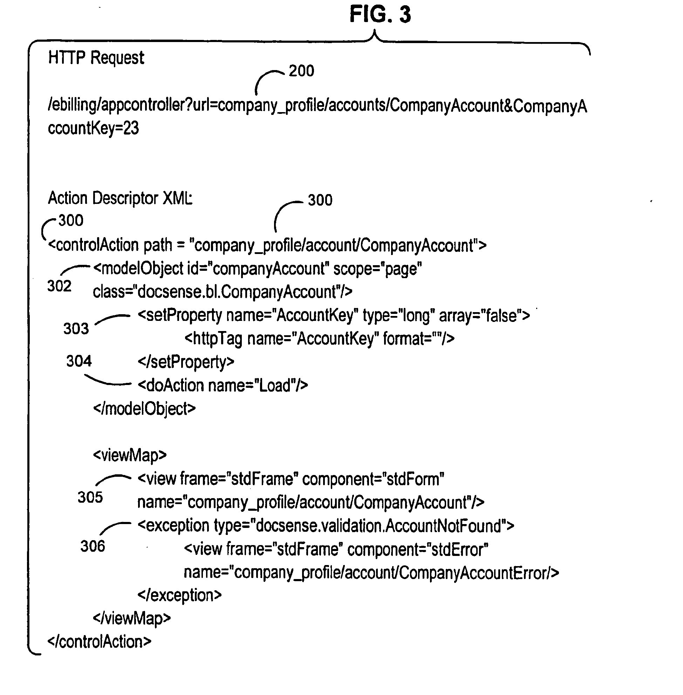

An exemplary HTTP request **200** from user **3** is depicted in Fig. 3 with a corresponding "Company Account" XML action descriptor **300.** In response to the HTTP request **200,** interaction controller **110** retrieves and interprets action descriptor **300.** At step **301** of the script, controller **110** interprets an XM L tag called "controlAction" defining responses to requests that have a particular URL parameter where "path = company_profile/account /CompanyAccount." At step **302** of the script, instructions to controller **110** for instantiating the "CompanyAccount" class are provided for the modelObject tag. Interpreting step **303,** the controller **110** will invoke a "setAccountKey" method of the CompanyAccount class, passing in a type "long" argument. The value of the type long argument will be retrieved from the HTTP request **200** parameter named "AccountKey" taken from the URL request. In the HTTP request **200** example of Figure 3, this value is "23." At step **304,** the controller **110** initializes the business object via the doAction name="load" call.

The XML action descriptor **300** further includes instructions for presentation of results generated by the business object **131.** If the business objects return a successful completion, then at step **305** the controller **110** instructs that a responsive presentation will use the view "stdForm" that will use the form descriptor named "CompanyAccount." If the business object fails, however, the controller will invoke an exception presentation using instead the view "stdError" and form descriptor named "CompanyAccountError," in accordance with script step **306.**

The business objects **131** within the business model logic module **130** preferably represent Java classes that will enforce certain basic business rules that are required by the system. These rules ensure the integrity of the information being manipulated in response to a request from a customer. For example, a business object "CompanyAccount," as described above, can include provisions to ensure that the values of other fields such as a company profile identification, or a user identification are set correctly for each CompanyAccount item, without the need to explicitly set them via an instruction in the action descriptor **300.** In prior art systems, much of the business rule logic was incorporated in JavaServer Pages in the front end presentation logic **13** (see Fig. 1). The prior art presentation logic **13** required re-coding to allow customization for different billers. In contrast, the present embodiment allows that business object **131** be constant for all billers, with the activation of those objects being customized through adjustments to the XML in the action descriptor repository **120.**

Business objects **131** provide more intuitive and higher level Application-Program Interface (API) that is used by the interaction controller **110** and objects in the presentation view logic module **150.** This provides the controller **110** and presentation logic **150** with more efficient means to interact with lower level items via the business objects **131.** The business objects **131** effectively shield the controller **110** and presentation logic **150** from the granularity of the interaction with the basic data objects.

The business objects **131** also provide helper methods that are utilized by the presentation view logic module **150.** In the case of the exemplary CompanyAccount dialog, in order for a new "UserAccount" field to be defined, it may be that values for "Publisher" and "PaymentProfile" fields must be chosen.
To help the presentation logic, the CompanyAccount business object provides an API that will retrieve a list of valid Publishers (CompanyAccount.PublisherList) as well as a method to retrieve the possible payment profiles that could be used for this account (CompanyAccount.PaymentMethodList). These lists may be stored in the business data repository **140** in any desired format such as an Oracle database or XML.

The CompanyAccount business object discussed herein could also provide access to other data objects that are associated with the account that is currently loaded. For example, an "AutoPayment" object that is connected to this particular account is easily accessed via an API call to "get AutoPay." This method call doesn't require the action descriptor to provide information about the Autopayment record. Once the appropriate script has been activated by controller **110,** the business object **131** determine itself which "AutoPayment" record to use. Relevant automatic payment data would be stored in the business data repository **140.**

Using this preferred embodiment of the present invention, the business objects **131** provide the API set for the general business function, not just the current interactions. Further, multiple interactions can use the same business object **131.** Using the present embodiment, the business objects **131** can act in accordance with any number of "doAction" calls, as identified in the XML of the action descriptor repository **120,** or elsewhere.

In operation, the presentation view logic module **150** provides the facilities to return a visual presentation to a user in response to an interaction request. As discussed above with respect to Fig. 3, the presentation can be determined based on the success or failure of the interaction controller **110** to execute the action descriptor.

In the preferred embodiment of the invention, a response **70** generated by the presentation view logic module **150** is an HTML web page presentation. Two factors that preferably determine the presentation of the HTML web page are the look-and-feel (LAF) active for the current request and an XML view descriptor indicated in the action descriptor.

The LAF template is derived by the LAF provider object **151** as selected from the LAF library **152.** View descriptors are stored in the view descriptor repository **154.** As with respect to the action descriptors, the view descriptors are preferably stored in XML format. The presentation view logic module **150** further includes a view resource repository **155** comprising data pertaining to cosmetic features such as graphics or special fonts.

The LAF template is the framework structure of the HTML presentation.
The LAF template determines where the main menu will appear, where the list or form presentation will appear on the page, and the way that each of these items will appear via a reference to the appropriate style sheet definitions. The LAF provider object **151** is responsible for architecting the overall shape and positioning of content in a web page. LAF object **151** is invoked by the interaction controller **110** after the action descriptor methods for a specific request have been completed by the business model logic module **130.** The LAF object **151** and the template stored in the LAF library **152** are referenced in the action descriptor in the action descriptor repository **120.** The LAF object **151** has initialization parameters that reference appropriate XML in the LAF library **152** to use as a template to structure the web page.

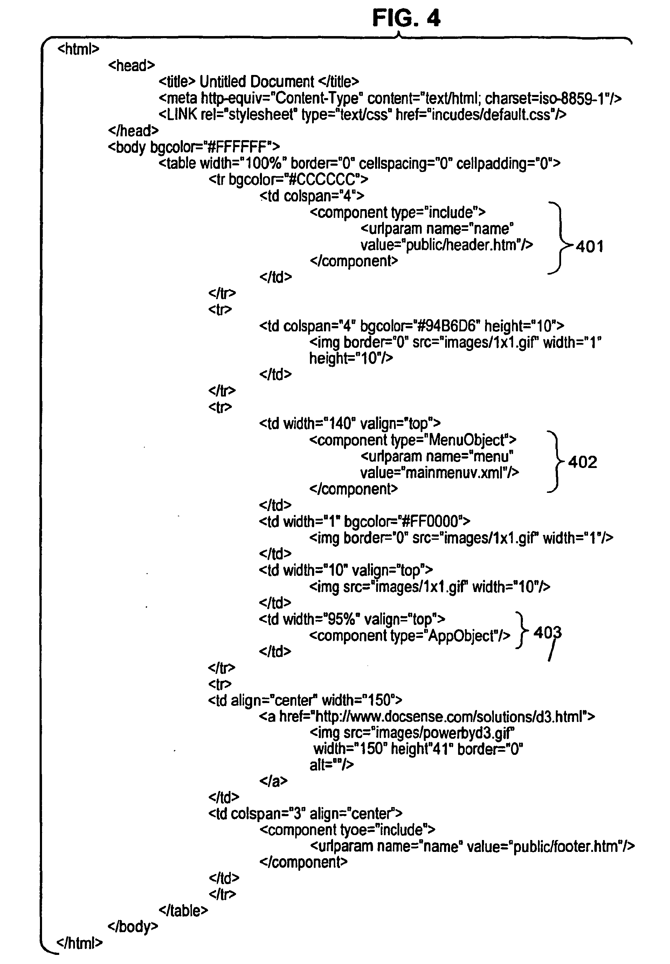

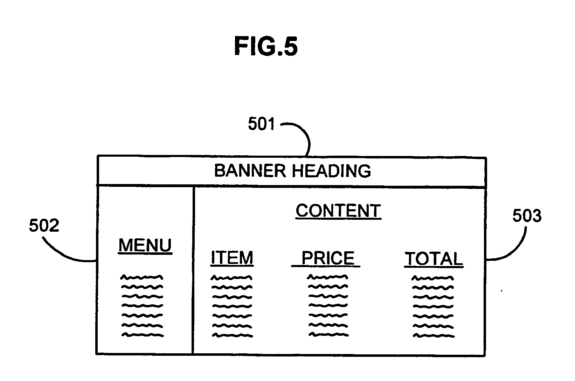

The LAF library 152 can include specific tags that identify HTML presentation parameters and presentation objects to be invoked by the LAF object 151. In the example shown in Figs. 4 and 5, the HTML stored in the XML at step **401** may describe a page having a banner **501** across the top of the page and another step **402** may describe a menu area **502** along the left side of a certain width. The HTML for step **402** also includes HTML indicating that a presentation object called "MenuObject" should be invoked at that point to create the appropriate HTML to render a menu. Later in the XML, at step **403,** a tag indicates that an object called "AppObject" should be invoked to create content to fill the defined area **503** on the right side of the page. The call for the "AppObject" of "application object" is a call to utilize the business logic results provided from a business **131** that provides a substantive result. In turn, the formatting object **153** provides the specific logic for turning the results into a format that can be inserted into the defined area **503.**

An example of view descriptors in repository **154** may be scripts of instructions for presenting a "LIST" of items, or they may describe elements of an HTML FORM to be presented at the user's browser, or there may be a pointer to a simple JavaServer Page (JSP). These view descriptors are retrieved by formatting object **153** for a particular type of business result that is obtained from the business logic module **130.**

The formatting object **153** (or any of the objects discussed in this application) may actually be a group of one or more objects for operating on particular business results from the business logic module **130,** for presentation within the LAF template identified by the LAF provider **151.** For example, if a "LIST" presentation is required by the view descriptor XML for the business results, a standard hosting object (part of formatting object **153**) that uses a "IistObject" class will be invoked with an argument that points "listObject" to the appropriate list descriptor in repository **154** that describes the elements and format of the list items to be presented. The list descriptor will describe each element that is to be displayed in the list and may associate that element with an API call to a business object that was invoked pursuant to an action descriptor from repository **120.** Headings for list elements may be static text or references to a resource item from the view resource repository **155.**

If a "FORM" type presentation is required by the view descriptor XML, a standard hosting object (again part of formatting object **153**) that uses the "formObject" class will be invoked with an argument that points the "formObject" to the appropriate form descriptor. This form descriptor will describe the form elements that are to appear on the presentation. Each element will be associated with an API call to a business object **131** that was invoked by controller **110** pursuant to a stored XML action descriptor from repository **120.** Any text that appears on the form such as a label for a field can be static text or may be a reference to a resource item from the view resource repository **155.**

The combination of the presentation descriptors from repository **154** and the formatting objects **153** remove the responsibility of the presentation from the coding of a JSP page that was used in the prior art system in Fig. 1. Instead, the appearance of the web page as well as the content of that page is controlled via configuration information stored in the respective repositories **120, 140, 154,** and **152.** These respective repositories are independent of the core software code that can be provided as a base product to individual billers, who may then achieve customization relatively easily by preparation of XML instruction scripts to be used with their processing and presentation of their billing data.

Repositories **120, 140, 154,** and **152** may reside in any number or configuration of physical storage devices. Also, the data for those repositories may be stored in common or separate data organizational structures. As long as the information is retrievable, the data can be stored in any combination of appropriate formats, *i*.*e*., database, directory tree, etc.

While the present invention has been described in connection with what is presently considered to be the preferred embodiments, it is to be understood that the invention is not limited to the disclosed embodiment, but is intended to cover various modifications and equivalent arrangements included within the scope of the appended claims. It should also be understood that certain features of the system described herein may be considered novel inventions in their own right, even if separated from the overall system described herein, and that the scope of protection afforded to the patentee should be determined in view of the following appended claims.

## Claims

1. An electronic bill presentment computer system for providing bill information from a biller to a remote customer over a network in response to the customer submitting a requested transaction to the electronic bill presentment computer system, the electronic bill presentment computer system configured and programmed to include:
a non-customized business logic module (130) including a plurality of business objects (131) for interacting with a business data repository (140) and performing calculations to determine electronic billing results;
an action descriptor repository (120) storing customized scripts of processing instructions for a plurality of potential transactions, each script being directed to particular electronic bill requirements of a biller and containing instructions describing what must occur for the transaction to be completed, the instructions including an identification of business objects within the non-customized business logic module to instantiate, methods to invoke the business objects, and a presentation instruction for the result;
a presentation descriptor repository (152,154,155), the presentation descriptor repository including data pertaining to the biller's particular look-and-feel for presentation of electronic billing results to the customer;
a presentation logic module (150) for receiving electronic billing results from the business logic module and providing a visual presentation of the electronic billing results to the customer, the presentation logic module being arranged to utilize look-and-feel data retrieved from the presentation descriptor repository (152,154,155); and
an interaction controller (110) for receiving a requested transaction including a universal resource locator parameter from a customer and retrieving the corresponding script of processing instructions from the action descriptor repository (120) based upon the universal resource locator parameter, the interaction controller being arranged to invoke business objects in the business logic module in accordance with the retrieved script of processing instructions and provide presentation instructions to the presentation logic module in accordance with the retrieved script of processing instructions;
wherein the action descriptor repository (120) and the presentation descriptor repository (152,154,155) are discrete from the business logic module (130), the presentation logic module (150), and the interaction controller (110), thereby providing that said repositories are the only part of the system directly reflecting the biller's particular electronic billing needs, the information in said repositories being customizable for the biller;
wherein the presentation descriptor repository further includes:
a look-and-feel library (152) including one or more presentation page templates;
a result descriptor repository (154) including instructions for presenting particular kinds of electronic billing results, as suited for the biller's particular electronic billing needs; and
an element resource repository (155) including cosmetic elements particular to the biller;
and wherein the presentation logic module further includes:
a look-and-feel object (151) for receiving presentation instructions from the interaction controller, the look-and-feel object being arranged to create an appropriate presentation page template for the requested transaction; and
a formatting object (153) for receiving electronic billing results from the business logic module and cooperating with the appropriate presentation page template from the look-and-feel object, the formatting object being arranged to format the electronic billing results in accordance with the instructions in the result descriptor repository and extract cosmetic elements from the element resource repository, the look-and-feel object and the formatting object thereby being arranged to prepare a result presentation page to send to the customer in response to the transaction request.

2. The system of Claim 1, wherein the business logic module and the presentation logic module are separate and discrete within the system, thereby providing that one may be modified without requiring modification of the other.

3. The system of Claim 1, wherein the one or more presentation page templates in the look-and-feel library are stored using descriptors in XML format.

4. The system of Claim 1, wherein the script of processing instructions in the action descriptor repository is stored in XML format.

5. The system of Claim 4, wherein the presentation descriptor repository comprises presentation information stored in XML format.

## Patentansprüche

1. Ein elektronisches Rechnungsvorlegungs-Computersystem zum Bereitstellen von Rechnungsinformation von einem Rechnungssteller an einen entfernten Kunden über ein Netzwerk in Reaktion darauf, dass der Kunde eine angeforderte Transaktion zu dem elektronischen
Rechnungsvorlegungs-Computersystem überträgt, wobei das elektronische Rechnungsvorlegungs-Computersystem konfiguriert und programmiert ist, um folgendes zu umfassen:
ein nicht angepasstes Businesslogikmodul (130), das eine Vielzahl von Businessobjekten (131) umfasst zum Interagieren mit einem Businessdatenspeicher (140) und zum Durchführen von Berechnungen, um elektronische Rechnungsergebnisse zu bestimmen;
ein Aktionsdeskriptorspeicher (120), der angepasste Skripte der Bearbeitung von Instruktionen für eine Vielzahl von potentiellen Transaktionen speichert,
wobei jedes Skript auf bestimmte elektronische Rechnungsvoraussetzungen eines Rechnungsstellers gerichtet ist und Instruktionen umfasst, die beschreiben, was geschehen muss, damit die Transaktion komplettiert wird, wobei die Instruktionen eine Identifizierung von Businessobjekten innerhalb des nicht angepassten Businesslogikmoduls zum Instanziieren, Verfahren zum Aufrufen der Businesobjekte und eine Präsentationsinstruktion für das Ergebnis umfassen;
einen Präsentationsdeskriptorspeicher (152, 154, 155), wobei der Präsentationsdeskriptorspeicher Daten umfasst, die sich auf die spezielle Anmutung des Rechnungsstellers für die Präsentation der elektronischen Rechnungsergebnisse für den Kunden beziehen;
ein Präsentationslogikmodul (150) zum Empfangen von elektronischen Rechnungsergebnissen von dem Businesslogikmodul und zum Bereitstellen einer visuellen Präsentation der elektronischen Rechnungsergebnisse an den Kunden, wobei das Präsentationslogikmodul angeordnet ist zum Verwenden von Anmutungsdaten, die abgerufen werden von dem Präsentationsdeskriptorspeicher (152, 154, 155); und
eine Interaktionssteuerungseinheit (110) zum Empfangen einer angeforderten Transaktion, die einen universellen Ressourcenpositionsgeberparameter umfasst, von einem Kunden und zum Abfragen des entsprechenden Skripts der Bearbeitungsinstruktionen von dem Aktionsdeskriptorspeicher (120) basierend auf dem universellen Ressourcenpositionsgeberparameter,
wobei die Interaktionssteuerungseinheit angeordnet ist zum Aufrufen von Businessobjekten in dem Businesslogikmodul in Übereinstimmung mit dem abgefragten Skript der Bearbeitungsinstruktionen, und Bereitstellen von Präsentationsinstruktionen an das Präsentationslogikmodul in Übereinstimmung mit dem abgefragten Skript der Bearbeitungsinstruktionen;
wobei der Aktionsdeskriptorspeicher (120) und der Präsentationsdeskriptorspeicher (152, 154, 155) getrennt von dem Businesslogikmodul (130), dem Präsentationslogikmodul (150) und der Interaktionssteuerungseinheit (110) sind, wodurch Bereitgestellt wird, dass die Speicher der einzige Teil des Systems sind, der direkt die bestimmten elektronischen Rechnungsbedürfnisse des Rechnungsstellers reflektieren, wobei die Information in den Speichern für den Rechnungsstellter anpassbar ist;
wobei der Präsentationsdeskriptorspeicher ferner folgendes umfasst:
eine Anmutungsbibliothek (152), die eine oder mehrere Präsentationsseitenmasken umfassen;
einen Ergebnisdeskriptorspeicher (154), der Instruktionen zum Präsentieren von elektronischen Rechnungsergebnissen bestimmter Art umfasst, die geeignet sind für bestimmten elektronischen Rechnungsbedürfnisse; und
einen Elemetressourcenaspeicher (155), der kosmetische Elemente umfasst, die speziell für den Rechnungssteller sind;
und wobei das Präsentationslogikmodul ferner folgendes umfasst:
ein Anmutungsobjekt (151) zum Empfangen von Präsentationsinstruktionen von der Interaktionssteuerungseinheit, wobei das Anmutungsobjekt angeordnet ist zum Erzeugen einer geeigneten Präsentationsseitenmaske für die angeforderte Transaktion; und
ein Formatierungsobjekt (153) zum Empfangen von elektronischen Rechnungsergebnissen von dem Businesslogikmodul und zum Kooperieren mit der geeigneten Präsentationsseitenmaske des Anmutungsobjekts, wobei das Formatierungsobjekt angeordnet ist zum Formatieren der elektronischen Rechnungsergebnisse in Übereinstimmung mit den Instruktionen in der Ergebnisdeskriptorspeicher und zum Extrahieren von kosmetischen Elementen von dem Elementressourcenspeicher, wobei das Anmutungsobjekt und das Formatierungsobjekt **dadurch** angeordnet sind, um eine Ergebnispräsentationsseite zu präparieren, um diese dem Kunden in Reaktion auf die Transaktionsanforderung zu senden.

2. Das System nach Anspruch 1, wobei das Businesslogikmodul und das Präsentationslogikmodul separat und getrennt innerhalb des Systems sind, wodurch bereitgestellt wird, dass eins modifiziert werden kann, ohne dass eine Modifizierung des anderen notwendig ist.

3. Das System nach Anspruch 1, wobei die eine oder die mehreren Präsentationsseitenmasken in der Anmutungsbibliothek gespeichert werden unter Verwendung von Deskriptoren im XML-Format.

4. Das System nach Anspruch 1, wobei das Skript von Bearbeitungsinstruktionen in dem Aktionsdeskriptorspeicher im XML-Format gespeichert ist.

5. Das System nach Anspruch 4, wobei der Präsentationsdeskriptorspeicher
Präsentationsinformation umfasst, die im XML-Format gespeichert ist.

## Revendications

1. Système informatique de présentation de factures électroniques, destiné à fournir des informations de facturation entre un commerçant et un client distant sur un réseau, en réponse à la soumission par le client d'une demande d'opération auprès du système informatique de présentation de factures électroniques, le système informatique de présentation de factures électroniques étant configuré et programmé pour inclure :
un module logique commercial non personnalisé (130), comprenant une pluralité d'objets commerciaux (131) destinés à interagir avec un référentiel de données commerciales (140) et à effectuer des calculs afin de déterminer des résultats de facturation électronique ;
un référentiel de descripteurs d'actions (120) stockant des scripts personnalisés composés d'instructions de traitement pour une pluralité d'opérations potentielles, chaque script étant conçu pour les besoins particuliers de facturation électronique d'un commerçant et contenant des instructions décrivant ce qui doit se produire pour l'opération à achever, les instructions comprenant une identification d'objets commerciaux à instancier dans le module logique commercial non personnalisé, de méthodes pour appeler les objets commerciaux et une instruction de présentation pour le résultat ;
un référentiel de descripteurs de présentations (152, 154, 155), le référentiel de descripteurs de présentations contenant des données concernant l'aspect et la convivialité particulier au commerçant pour la présentation des résultats de la facturation électronique au client ;
un module logique de présentation (150), destiné à recevoir des résultats de facturation électronique du module de logique commerciale et à fournir au client une présentation visuelle des résultats de la facturation électronique, le module logique de présentation étant conçu pour utiliser des données d'aspect et de convivialité obtenues du référentiel de descripteurs de présentations (152, 154, 155) ; et
un contrôleur d'interaction (110), destiné à recevoir d'un client une demande d'opération comprenant un paramètre de localisateur universel de ressource et à obtenir le script correspondant d'instructions de traitement auprès du référentiel de descripteurs d'actions (120), sur la base du paramètre de localisateur universel de ressource, le contrôleur d'interaction étant conçu pour appeler des objets commerciaux dans le module logique commercial et pour fournir des instructions de présentation au module logique de présentation, en fonction du script d'instructions de traitement obtenu ;
dans lequel le référentiel de descripteurs d'actions (120) et le référentiel de descripteurs de présentations (152, 154, 155) sont dissociés du module logique commercial (130), du module logique de présentation (150) et du contrôleur d'interaction (110), ce qui assure que lesdits référentiels sont la seule partie du système qui reflète directement les besoins particuliers de facturation électronique du commerçant, les informations dans lesdits référentiels pouvant être individualisées par le commerçant ;
dans lequel le référentiel de descripteurs de présentations comprend en outre :
une bibliothèque d'aspect et de convivialité (152) incluant un ou plusieurs gabarits de pages de présentation ;
un référentiel de descripteurs de résultats (154) incluant des instructions pour la présentation de types particuliers de résultats de facturation électronique, d'une manière qui convient pour les besoins particuliers de facturation électronique du commerçant ; et
un référentiel de ressources élémentaires (155) incluant des éléments cosmétiques particuliers au commerçant ;
et dans lequel le module logique de présentation comprend en outre :
un objet d'aspect et de convivialité (151), destiné à recevoir du contrôleur d'interaction des instructions de présentation, l'objet d'aspect et de convivialité étant conçu pour créer un gabarit approprié de page de présentation pour la demande d'opération ; et
un objet de formatage (153), destiné à recevoir des résultats de facturation électronique du module logique commercial et à coopérer avec le gabarit voulu de page de présentation provenant de l'objet d'aspect et de convivialité, l'objet de formatage étant conçu pour formater les résultats de la facturation électronique en fonction des instructions se trouvant dans le référentiel de descripteurs de résultats et pour extraire des éléments cosmétiques du référentiel de ressources élémentaires, l'objet d'aspect et de convivialité et l'objet de formatage étant ainsi conçus pour préparer une page de présentation de résultats à envoyer au client en réponse à la demande d'opération.

2. Système selon la revendication 1, dans lequel le module logique commercial et le module logique de présentation sont séparés et distincts au sein du système, ce qui permet que l'un soit modifié sans nécessiter une modification de l'autre.

3. Système selon la revendication 1, dans lequel les un ou plusieurs gabarits de pages de présentation dans la bibliothèque d'aspect et de convivialité sont stockés à l'aide de descripteurs dans le format XML.

4. Système selon la revendication 1, dans lequel le script d'instructions de traitement, dans le référentiel de descripteurs d'actions, est stocké dans le format XML.

5. Système selon la revendication 4, dans lequel le référentiel de descripteurs de présentation comprend des informations de présentation stockées dans le format XML.
